# FASCICULE DE BREVET EUROPEEN

(11) **EP 3 742 296 B1**
(45) Date de publication et mention de la délivrance du brevet: **24.08.2022**
(21) Numéro de dépôt: 20175681.4
(22) Date de dépôt: 20.05.2020
(51) Int. Cl.: G06F 11/07, G06F 11/30

(54) **PROCEDE D'APPRENTISSAGE POUR LA DETECTION D'ANOMALIES IMPLEMENTE SUR UN MICROCONTROLEUR ET PROCEDE DE DETECTION D'ANOMALIES ASSOCIE**
LERNVERFAHREN FÜR DIE ERKENNUNG VON ANOMALIEN, DAS IN EINEM MICROCONTROLLER IMPLEMENTIERT IST, UND ENTSPRECHENDES ERKENNUNGSVERFAHREN VON ANOMALIEN
LEARNING METHOD FOR DETECTING ANOMALIES IMPLEMENTED ON A MICROCONTROLLER AND ASSOCIATED METHOD FOR DETECTING ANOMALIES

(30) Priorité: 21.05.2019 FR 1905293
(43) Date de publication de la demande: 25.11.2020
(73) Titulaire: Cartesiam, 83000 Toulon (FR)
(72) Inventeur: DE ROCHEBOUET, François, 83000 Toulon (FR); HUANG, He, 83000 Toulon (FR)
(74) Mandataire: Casalonga

(56) Documents cités:
- WO-A1-2007/087729
- US-A1- 2010 262 858
- US-A1- 2018 299 877

## Description

### DOMAINE TECHNIQUE DE L'INVENTION

Le domaine technique de l'invention est celui des procédés de détection d'anomalies et plus particulièrement celui des procédés de détection d'anomalies implémentés sur un microcontrôleur.

La présente invention concerne un procédé d'apprentissage pour la détection d'anomalies et en particulier un procédé d'apprentissage pour la détection d'anomalies implémenté sur un microcontrôleur. La présente invention concerne également un procédé de détection d'anomalies.

### ARRIERE-PLAN TECHNOLOGIQUE DE L'INVENTION

Les algorithmes de détection d'anomalies utilisent classiquement des techniques de deep learning comme les réseaux de neurones, permettant d'obtenir des taux de détection élevés. De telles techniques nécessitent l'utilisation de processeurs puissants et d'une quantité importante de ressources mémoire pour être fonctionnelles.

Ainsi, ces techniques sont incompatibles avec une implémentation sur microcontrôleur contraint en termes de ressources mémoire mais ayant un haut degré d'intégration grâce à ses dimensions réduites.

Il existe donc un besoin de concevoir un algorithme de détection d'anomalies permettant d'obtenir des taux de détection comparables à ceux obtenus avec les techniques de deep learning, implémenté sur un microcontrôleur pouvant être embarqué sur n'importe quel système quel que soit son environnement.

Le document WO2017/087729 intitulé « Intelligent monitoring system and method for building prédictive models and detecting anomalies » est connu de l'état de la technique.

### RESUME DE L'INVENTION

L'invention offre une solution aux problèmes évoqués précédemment, en permettant de détecter des anomalies grâce à un algorithme implémenté sur un microcontrôleur ayant une haute capacité d'intégration.

Un premier aspect de l'invention concerne un procédé d'apprentissage pour la détection d'anomalies implémenté sur un microcontrôleur comportant au moins une mémoire, le microcontrôleur étant configuré pour recevoir des jeux de données en provenance d'au moins un capteur, la mémoire étant configurée pour stocker un nombre maximal de catégories, une catégorie comportant au moins une signature et une occurrence, le procédé étant caractérisé en ce qu'il comporte les étapes suivantes :
- Tant qu'un taux d'avancement est inférieur à un seuil d'avancement, pour chaque jeu de données d'un ensemble de jeux de données :
   - Stockage du jeu de donnée dans la mémoire ;
   - Calcul d'une signature du jeu de données ;
   - S'il existe au moins une catégorie stockée dans la mémoire :
      - Calcul d'une mesure de similitude entre la signature du jeu de données et la signature de chaque catégorie et sélection de la mesure de similitude maximale :
         - Si la mesure de similitude maximale répond à une condition de mise à jour, mise à jour de la catégorie correspondante à partir du jeu de données ;
         - Sinon :
            - Si le nombre de catégories stockées dans la mémoire est inférieur à un nombre maximal de catégories, création d'une catégorie à partir du jeu de données dans la mémoire ;
            - Sinon, sélection de la catégorie ayant une occurrence minimale ;
               - Si l'occurrence minimale répond à une condition d'occurrence, suppression de la catégorie correspondante et création d'une catégorie à partir du jeu de données dans la mémoire ;
               - Sinon, sélection des deux catégories dont les signatures ont une mesure de similitude maximale, création d'une unique catégorie par fusion des deux catégories sélectionnées et création d'une catégorie à partir du jeu de données dans la mémoire ;
   - S'il n'existe aucune catégorie, création d'une catégorie à partir du jeu de données dans la mémoire ;
   - Suppression du jeu de données de la mémoire et mise à jour du taux d'avancement.

Grâce à l'invention, chaque jeu de données délivré par le capteur pendant l'apprentissage est affecté à une catégorie représentative de jeux de données similaires ou à une nouvelle catégorie, sans dépasser le nombre maximal de catégories correspondant au maximum de ressources mémoire allouables aux catégories dans la mémoire du microcontrôleur.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon une alternative de réalisation, la sous-étape de mise à jour d'une catégorie comporte une étape de mise à jour de la signature de la catégorie à partir de la signature du jeu de données et d'incrémentation de l'occurrence de la catégorie.

Ainsi, la catégorie la plus proche du jeu de données est mise à jour pour prendre en compte les caractéristiques du jeu de données.

Selon une alternative de réalisation compatible avec l'alternative de réalisation précédente, la sous-étape de création d'une catégorie comporte une étape d'affectation de la signature du jeu de données à la signature de l'unique catégorie et d'affection d'une occurrence de 1 à la catégorie.

Ainsi, les caractéristiques de la nouvelle catégorie sont celles du jeu de données.

Selon une alternative de réalisation compatible avec les alternatives de réalisation précédentes, la sous-étape de création d'une unique catégorie par fusion comporte une étape d'affectation du barycentre des signatures des deux catégories à fusionner à la signature de l'unique catégorie et d'affection de la somme des occurrences des deux catégories à fusionner à l'occurrence de l'unique catégorie.

Ainsi, les caractéristiques de l'unique catégorie prennent en compte les caractéristiques des deux catégories fusionnées.

Un deuxième aspect de l'invention concerne un procédé de détection d'anomalies implémenté sur un microcontrôleur comportant au moins une mémoire, le microcontrôleur étant configuré pour recevoir des jeux de données en provenance d'au moins un capteur, la mémoire étant configurée pour stocker un nombre maximal de catégories, une catégorie comportant au moins une signature et une occurrence, le procédé étant caractérisé en ce qu'il comporte les étapes du procédé d'apprentissage selon un premier aspect de l'invention suivies des étapes suivantes :
- Pour chaque jeu de données reçu :
   - Stockage du jeu de données dans la mémoire ;
   - Calcul de la signature du jeu de données ;
   - Sélection de la catégorie d'occurrence maximale et calcul de la mesure de similitude entre la signature du jeu de données et la signature de la catégorie sélectionnée :
      - Si la mesure de similitude répond à une condition de normalité, suppression du jeu de données de la mémoire ;
      - Sinon, s'il reste des catégories pour lesquelles aucune mesure de similitude n'a été calculée avec la signature du jeu de données et que les mesures de similitude précédemment calculées ne répondent pas à la condition de normalité :
         - Sélection de la catégorie ayant une occurrence égale ou immédiatement inférieure à l'occurrence de la catégorie dont la signature a été utilisée pour calculer la mesure de similitude précédente et calcul de la mesure de similitude entre la signature du jeu de données et la signature de la catégorie sélectionnée ;
         - Si la mesure de similitude répond à la condition de normalité, suppression du jeu de données de la mémoire ;
         - Si aucune des mesures de similitude précédemment calculées ne répond à la condition de normalité, détection d'une anomalie et suppression du jeu de données de la mémoire.

Ainsi, le procédé de détection d'anomalies selon un deuxième aspect de l'invention utilise les catégories créées lors du procédé d'apprentissage selon un premier aspect de l'invention pour détecter efficacement les anomalies en stoppant les calculs dès que le jeu de données étudié peut être considéré comme non anormal, ce qui limite la quantité de ressources mémoire utilisées pour les calculs dans la mémoire du microcontrôleur.

Selon une alternative de réalisation, l'étape de détection d'une anomalie comporte une sous-étape de déclenchement d'une alarme.

Selon une alternative de réalisation compatible avec l'alternative de réalisation précédente, l'étape de détection d'une anomalie comporte une sous-étape d'envoi d'un message d'alerte.

Selon une alternative de réalisation compatible avec les alternatives de réalisation précédentes, le procédé selon un deuxième aspect de l'invention comporte à nouveau les étapes du procédé d'apprentissage selon un premier aspect de l'invention.

Ainsi, si l'environnement du dispositif sur lequel la détection d'anomalies est effectuée a changé, il est possible de réaliser une nouvelle phase d'apprentissage.

Un troisième aspect de l'invention concerne un microcontrôleur implémentant les étapes du procédé d'apprentissage selon un premier aspect de l'invention et/ou les étapes du procédé de détection d'anomalies selon un deuxième aspect de l'invention, comportant un processeur et une mémoire et recevant des jeux de données en provenance d'au moins un capteur.

Selon un mode de réalisation, le capteur est connecté au microcontrôleur via un bus de données série.

Selon un autre mode de réalisation, le capteur est connecté au microcontrôleur via une connexion filaire ou non filaire.

Un quatrième aspect de l'invention concerne un produit-programme d'ordinateur comprenant des instructions qui, lorsque le programme est exécuté par un ordinateur, conduisent celui-ci à mettre en œuvre les étapes du procédé d'apprentissage selon un premier aspect de l'invention et/ou les étapes du procédé de détection d'anomalies selon un deuxième aspect de l'invention

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un schéma synoptique d'un procédé d'apprentissage selon un premier aspect de l'invention.
- La figure 2 montre un schéma synoptique d'un procédé de détection d'anomalies selon un deuxième aspect de l'invention.
- La figure 3 montre une représentation schématique d'un microcontrôleur selon un troisième aspect de l'invention.

### DESCRIPTION DETAILLEE

Sauf précision contraire, un même élément apparaissant sur des figures différentes présente une référence unique.

Un premier aspect de l'invention concerne un procédé d'apprentissage pour la détection d'anomalies implémenté sur un microcontrôleur recevant des jeux de données en provenance d'au moins un capteur.

Un deuxième aspect de l'invention concerne un procédé de détection d'anomalies comportant le procédé d'apprentissage selon un premier aspect de l'invention implémenté sur un microcontrôleur recevant des jeux de données en provenance d'au moins un capteur.

Un même microcontrôleur peut être utilisé pour implémenter le procédé d'apprentissage selon un premier aspect de l'invention et le procédé de détection selon un deuxième aspect de l'invention.

On entend par « détection d'anomalies », l'identification de données particulières qui diffèrent de manière significative de la majorité des autres données.

La détection d'anomalies est par exemple utilisée pour la supervision de machines industrielles dans le cadre de la maintenance prédictive, pour la détection de surconsommations énergétiques dans un foyer ou encore pour détecter un intrus dans une pièce.

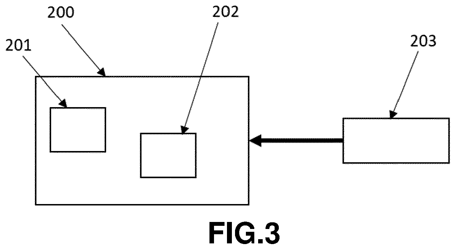

[Fig 3] La figure 3 montre une représentation schématique d'un microcontrôleur 200 selon un deuxième aspect de l'invention.

Un microcontrôleur 200 est un circuit intégré comportant un microprocesseur 202 et au moins une mémoire 201. Sur la figure 3, le microcontrôleur 200 comporte une unique mémoire 201.

Le microprocesseur 202 a par exemple une fréquence supérieure à 2 MHz. Le microprocesseur 202 est par exemple un microprocesseur de 50 MHz.

La mémoire 201 a des capacités de stockage lui permettant de stocker un nombre fini de catégories et un unique jeu de données. Le nombre de catégories que peut stocker la mémoire 201 dépend donc des capacités de stockage de la mémoire 201 mais aussi de la taille du jeu de données étudié.

Une catégorie comporte une signature, au moins une signature d'un jeu de données et une occurrence. L'occurrence correspond au nombre de signatures de jeu de donnée stockées dans la catégorie.

On entend par « signature », un élément représentatif. La signature d'une catégorie est donc un élément représentatif de cette catégorie.

Une signature est une distribution statistique discrète. Ainsi, la signature d'un jeu de données est une distribution statistique discrète appliquée aux données du jeu de données et la signature d'une catégorie est une distribution statistique discrète appliquée aux signatures des jeux de données stockées dans la catégorie.

La distribution statistique discrète pour un jeu de données peut être différente de la distribution statistique discrète pour une catégorie.

La signature d'une catégorie est par exemple la moyenne, la médiane, la variance, le maximum, le minimum ou encore le taux de corrélation des signatures des jeux de données stockées dans la catégorie.

La mémoire 201 a par exemple une mémoire vive d'au moins 2 kilooctets. La mémoire 201 a par exemple une mémoire vive de 32 kilooctets et peut alors stocker 32 catégories au maximum, le nombre de catégories pouvant être stockées dépendant de la taille du jeu de données étudié.

Le microcontrôleur 200 reçoit des données en provenance d'au moins un capteur 203. Sur la figure 3, le microcontrôleur 200 reçoit des jeux de données en provenance d'un unique capteur 203.

Selon un premier mode de réalisation, le capteur 203 est connecté au microcontrôleur 200 via un bus de données série, par exemple un bus de données série I2C, SPI, CAN ou UART.

Selon un deuxième mode de réalisation, le microcontrôleur 200 reçoit par exemple les jeux de données du capteur 203 via une connexion filaire, par exemple une liaison Ethernet, ou une connexion sans fil, par exemple une connexion Bluetooth ou Wifi.

Le capteur 203 est par exemple un accéléromètre ayant une fréquence d'échantillonnage donnée. Un jeu de données comporte alors par exemple 1024 valeurs de fréquences à une fréquence d'échantillonnage de 800 Hz.

Le capteur 203 est par exemple un thermomètre délivrant des jeux de données de température.

Le capteur 203 est par exemple un baromètre délivrant des jeux de données de pression.

Le capteur 203 est par exemple une caméra thermique. Un jeu de données est par exemple une matrice 8x8 de pixels.

Le microcontrôleur 200 peut être connecté à plusieurs capteurs 203. Les jeux de données sont alors composés, un jeu de données comporte par exemple des données de pression et des données de température.

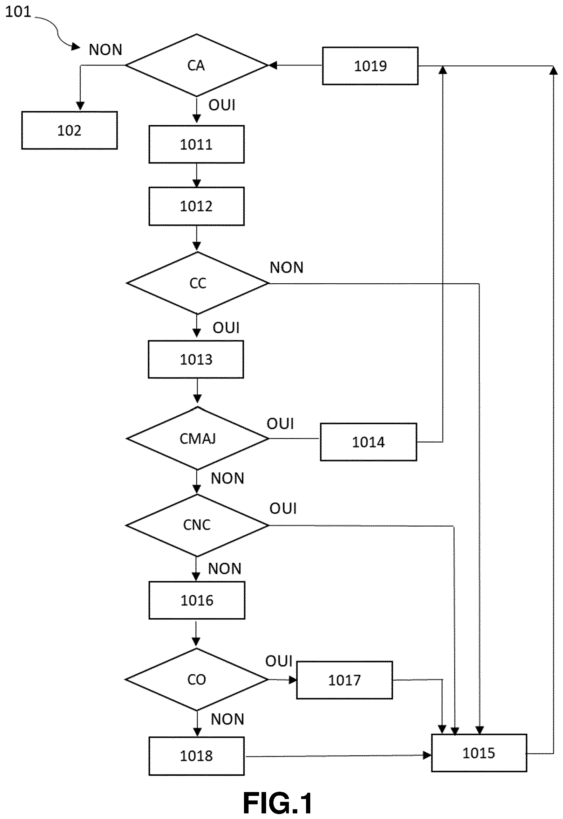

[Fig 1] La figure 1 est un schéma synoptique illustrant l'enchaînement des étapes 1011 à 1019 du procédé 101 d'apprentissage selon un premier aspect de l'invention.

Le procédé 101 d'apprentissage selon un premier aspect de l'invention est un procédé d'apprentissage non supervisé réalisé sur un ensemble de jeux de données fournis par le capteur 203.

On entend par « apprentissage non supervisé », un apprentissage automatique réalisé avec des données non étiquetées, c'est-à-dire des données brutes telles que fournies par le capteur 203.

Les étapes 1011 à 1019 du procédé 101 sont réalisées pour chaque jeu de données de l'ensemble de jeux de données.

La première étape 1011 consiste à stocker le jeu de données dans la mémoire 201 du microcontrôleur 200.

La deuxième étape 1012 consiste à calculer une signature pour le jeu de données stocké dans la mémoire 201 du microcontrôleur 200.

La signature d'un jeu de données est calculée différemment selon le type de données fournies par le capteur 203.

Dans le cas où le jeu de données est fréquentiel, la signature du jeu de données est par exemple la transformée de Fourier discrète du jeu de données.

Dans le cas où le jeu de données est une matrice de pixels, la signature du jeu de données est par exemple la moyenne ou la médiane des niveaux de gris sur ces pixels.

Une condition de catégorie CC est qu'il existe au moins une catégorie stockée dans la mémoire 201 du microcontrôleur 200.

Si la condition de catégorie CC est vérifiée, la troisième étape 1013 est réalisée.

La troisième étape 1013 consiste à calculer une mesure de similitude entre la signature du jeu de données et la signature de chaque catégorie stockée dans la mémoire 201 du microcontrôleur 200.

La mesure de similitude est par exemple calculée à partir de caractéristiques de position, comme par exemple la médiane et/ou la moyenne, et/ou de caractéristiques de dispersion, comme par exemple la variance et/ou l'écart type de la distribution statistique discrète choisie comme signature du jeu de données étudié.

Dans le cas où la signature d'une catégorie est la moyenne des signatures des jeux de données stockées dans la catégorie, la mesure de similitude est par exemple un calcul de distance entre la signature de la catégorie et la moyenne de la distribution statistique discrète utilisée comme signature du jeu de données étudié. La distance utilisée est par exemple une distance euclidienne.

Ainsi, dans le cas où le jeu de données est fréquentiel, la mesure de similitude est par exemple la distance euclidienne entre la moyenne des fréquences obtenues grâce à la transformée de Fourier discrète appliquée au jeu de données étudié et la moyenne des fréquences obtenues grâce à la transformée de Fourier discrète de chaque jeu de données stocké dans la catégorie.

Une fois qu'une mesure de similitude a été calculée pour chaque catégorie stockée dans la mémoire 201 du microcontrôleur 200, la troisième étape 1013 consiste à sélectionner la mesure de similitude maximale.

Si plusieurs catégories ont la même mesure de similitude maximale, la catégorie d'occurrence maximale est sélectionnée. Si plusieurs de ces catégories ont une même occurrence maximale, la sélection est aléatoire.

Si une condition de mise à jour CMAJ est vérifiée, la quatrième étape 1014 est réalisée.

La condition de mise à jour CMAJ est par exemple basée sur la moyenne des mesures de similitude calculées entre le jeu de données étudié et chaque catégorie ou mesure de similitude moyenne. Par exemple, la condition de mise à jour CMAJ est que la mesure de similitude maximale soit supérieure à 1,5 fois la mesure de similitude moyenne.

La quatrième étape 1014 consiste à mettre à jour la catégorie correspondant à la mesure de similitude maximale à partir du jeu de données.

Par exemple, la signature de la catégorie correspondante est mise à jour à partir de la signature du jeu de données, la signature du jeu de données est stockée dans la catégorie correspondante et l'occurrence de la catégorie correspondante est incrémentée de 1.

Par exemple, dans le cas où la signature de la catégorie est la moyenne des signatures des jeux de données stockées dans la catégorie, la mise à jour de la catégorie consiste à recalculer la moyenne des signatures des jeux de données stockées dans la catégorie après ajout dans la catégorie de la signature du jeu de données étudié.

Une condition de nombre de catégories CNC est que le nombre de catégories stockées dans la mémoire 201 du microcontrôleur 200 est inférieur au nombre maximal de catégories que peut stocker la mémoire 201.

Si la condition de mise à jour CMAJ n'est pas vérifiée et que la condition de nombre de catégories CNC est vérifiée, la cinquième étape 1015 est réalisée.

La cinquième étape 1015 consiste à créer une nouvelle catégorie à partir du jeu de données et stocker la nouvelle catégorie dans la mémoire 201 du microcontrôleur 200.

Par exemple, la signature de la nouvelle catégorie est la signature du jeu de données et l'occurrence est de 1.

Si la condition de mise à jour CMAJ et la condition de nombre de catégories CNC ne sont pas vérifiées, la sixième étape 1016 est réalisée.

La sixième étape 1016 consiste à sélectionner, parmi les catégories stockées dans la mémoire 201 du microcontrôleur 200, la catégorie ayant l'occurrence minimale.

Si plusieurs catégories ont une même occurrence minimale, l'une des catégories est sélectionnée aléatoirement.

Si une condition d'occurrence CO est vérifiée, la septième étape 1017 est réalisée.

La condition d'occurrence CO dépend par exemple du rapport entre l'occurrence minimale et la somme des occurrences de toutes les catégories. Par exemple, la condition d'occurrence CO est que l'occurrence minimale soit inférieure à 5% de la somme des occurrences de toutes les catégories.

La septième étape 1017 consiste à supprimer de la mémoire 201 du microcontrôleur 200 la catégorie correspondant à l'occurrence minimale.

Une fois la catégorie correspondante supprimée, la cinquième étape 1015 de création d'une nouvelle catégorie à partir du jeu de données est réalisée.

Si la condition d'occurrence CO n'est pas vérifiée, la huitième étape 1018 est réalisée.

La huitième étape 1018 consiste à fusionner deux catégories stockées dans la mémoire 201 du microcontrôleur 200 pour créer une unique catégorie.

Les deux catégories fusionnées sont celles ayant la mesure de similitude maximale entre leurs signatures.

La fusion crée par exemple une unique catégorie ayant pour signature le barycentre des signatures des deux catégories fusionnées, ayant pour occurrence la somme des occurrences des deux catégories et stockant les signatures de jeux de données des deux catégories.

Une fois les deux catégories fusionnées en une unique catégorie, la cinquième étape 1015 de création d'une nouvelle catégorie à partir du jeu de données est réalisée.

Si la condition de catégorie CC n'est pas vérifiée suite à la deuxième sous-étape 1012, la cinquième étape 1015 de création d'une nouvelle catégorie à partir du jeu de données est réalisée.

Une fois qu'une nouvelle catégorie a été créée à partir du jeu de données ou qu'une catégorie stockée dans la mémoire 201 du microcontrôleur 200 a été mise à jour à partir du jeu de données, la neuvième étape 1019 est réalisée.

La neuvième étape 1019 consiste à supprimer le jeu de données de la mémoire 201 du microcontrôleur 200 et à mettre un jour un taux d'avancement.

Le taux d'avancement est par exemple incrémenté quand aucune catégorie n'a été créée pour le jeu de données et décrémenté dans le cas inverse.

Les étapes 1011 à 1019 du procédé 101 d'apprentissage sont réalisées tant que le taux d'avancement est inférieur à un seuil d'avancement prédéfini CA. L'ensemble de jeux de données correspond alors à l'ensemble des jeux de données fournis par le capteur 203 tant que le taux d'avancement est inférieur au seuil d'avancement.

Le seuil d'avancement est par exemple de 80 %.

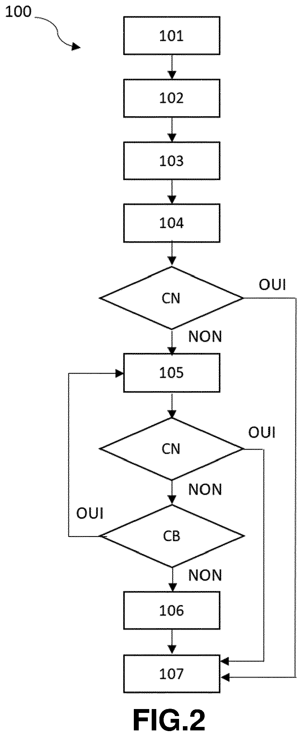

[Fig 2] La figure 2 est un schéma synoptique illustrant l'enchaînement des étapes 101 à 107 du procédé 100 de détection d'anomalies selon un deuxième aspect de l'invention.

Une fois le procédé 101 d'apprentissage réalisé, les étapes 102 à 107 du procédé 100 de détection d'anomalies selon un deuxième aspect de l'invention sont réalisées pour chaque jeu de données fourni par le capteur 203.

La deuxième étape 102 consiste à stocker le jeu de données dans la mémoire 201 du microcontrôleur 200.

La troisième étape 103 consiste à calculer la signature du jeu de données.

La quatrième étape 104 consiste à sélectionner la catégorie d'occurrence maximale et à calculer la mesure de similitude entre la signature du jeu de données et la signature de la catégorie d'occurrence maximale.

Si plusieurs catégories ont une même occurrence maximale, la sélection est aléatoire parmi ces catégories.

Si une condition de normalité CN est vérifiée pour la mesure de similitude de la catégorie d'occurrence maximale, la septième étape 107 est réalisée.

La condition de normalité CN est par exemple que la mesure de similitude de la catégorie d'occurrence maximale soit supérieure ou égale à la mesure de similitude moyenne entre les signatures des jeux de données stockées dans la catégorie.

La septième étape 107 consiste à supprimer le jeu de données de la mémoire 201 du microcontrôleur 200.

Si la condition de normalité CN n'est pas vérifiée pour la mesure de similitude de la catégorie d'occurrence maximale et tant qu'il reste des catégories pour lesquelles aucune mesure de similitude n'a été calculée avec la signature du jeu de données et qu'aucune des mesures de similitude précédemment calculées ne répond à la condition de normalité CN CB, la cinquième étape 105 est réalisée.

La cinquième étape 105 consiste à sélectionner la catégorie ayant l'occurrence égale ou immédiatement inférieure à l'occurrence de la catégorie dont la signature a été utilisée pour calculer la dernière mesure de similitude et à calculer la mesure de similitude entre la signature du jeu de données et la signature de la catégorie sélectionnée.

Si la condition de normalité CN est vérifiée pour la mesure de similitude calculée à la cinquième étape 105, la septième étape 107 de suppression du jeu de données de la mémoire 201 est réalisée.

Si la condition de normalité CN n'est pas vérifiée pour la mesure de similitude calculée à la cinquième étape 105 et qu'il reste des catégories pour lesquelles aucune mesure de similitude n'a été calculée avec la signature du jeu de données, la cinquième étape 105 est réalisée à nouveau.

Si la condition de normalité CN n'est vérifiée pour aucune des mesures de similitude précédemment calculées et qu'une mesure de similitude a été calculée pour chaque catégorie de la mémoire 201, la sixième étape 106 est réalisée.

La sixième étape 106 consiste à détecter une anomalie.

La sixième étape 106 peut par exemple consister dans le déclenchement d'une alarme ou dans l'envoi d'un message d'alerte à un équipement donné.

Une fois l'anomalie détectée, la septième étape 107 de suppression du jeu de données de la mémoire 201 est réalisée.

La détection d'une anomalie peut entraîner une reprise de l'apprentissage, c'est-à-dire que la détection d'anomalies peut être suivie du procédé 101 d'apprentissage. La décision de reprise de l'apprentissage est une prise de décision extérieure au procédé 100.

## Revendications

1. Procédé (101) d'apprentissage pour la détection d'anomalies implémenté sur un microcontrôleur (200) comportant au moins une mémoire (201), le microcontrôleur (200) étant configuré pour recevoir des jeux de données en provenance d'au moins un capteur (203), la mémoire (201) étant configurée pour stocker un nombre maximal de catégories, une catégorie comportant au moins une signature et une occurrence, le procédé (101) étant **caractérisé en ce qu'**il comporte les étapes suivantes :
- Tant qu'un taux d'avancement est inférieur à un seuil d'avancement (CA), pour chaque jeu de données d'un ensemble de jeux de données :
o Stockage du jeu de donnée dans la mémoire (201, 1011) ;
o Calcul d'une signature du jeu de données (1012) ;
o S'il existe au moins une catégorie stockée dans la mémoire (201, CC) :
1. Calcul d'une mesure de similitude entre la signature du jeu de données et la signature de chaque catégorie et sélection de la mesure de similitude maximale (1013) :
a. Si la mesure de similitude maximale répond à une condition de mise àjour (CMAJ), mise àjour de la catégorie correspondante à partir du jeu de données (1014) ;
b. Sinon :
i. Si le nombre de catégories stockées dans la mémoire (201) est inférieur au nombre maximal de catégories (CNC), création d'une catégorie à partir du jeu de données (1015) dans la mémoire (201) ;
ii. Sinon, sélection de la catégorie ayant une occurrence minimale (1016) ;
1. Si l'occurrence minimale répond à une condition d'occurrence (CO), suppression de la catégorie correspondante (1017) et création d'une catégorie à partir du jeu de données (1015) dans la mémoire (201) ;
2. Sinon, sélectionner les deux catégories dont les signatures ont une mesure de similitude maximale, création d'une unique catégorie par fusion des deux catégories sélectionnées (1018) et création d'une catégorie à partir du jeu de données dans la mémoire (201, 1015) ;
∘ S'il n'existe aucune catégorie, création d'une catégorie à partir du jeu de données dans la mémoire (201, 1015) ;
∘ Suppression du jeu de données de la mémoire (201) et mise à jour du taux d'avancement (1019).

2. Procédé (101) d'apprentissage selon la revendication 1, **caractérisé en ce que** la sous-étape (1014) de mise à jour d'une catégorie comporte une étape de mise à jour de la signature de la catégorie à partir de la signature du jeu de données et d'incrémentation de l'occurrence de la catégorie.

3. Procédé (101) d'apprentissage selon l'une quelconque des revendications précédentes, **caractérisé en ce que** la sous-étape (1015) de création d'une catégorie comporte une étape d'affectation de la signature du jeu de données à la signature de l'unique catégorie et d'affection d'une occurrence de 1 à la catégorie.

4. Procédé (101) d'apprentissage selon l'une quelconque desrevendications précédentes, **caractérisé en ce que** la sous-étape (1018) de création d'une unique catégorie par fusion comporte une étape d'affectation du barycentre des signatures des deux catégories à fusionner à la signature de l'unique catégorie et d'affection de la somme des occurrences des deux catégories à fusionner à l'occurrence de l'unique catégorie.

5. Procédé (100) de détection d'anomalies implémenté sur un microcontrôleur (200) comportant au moins une mémoire (201), le microcontrôleur(200) étant configuré pour recevoir des jeux de données en provenance d'au moins un capteur (203), la mémoire (201) étant configurée pour stocker un nombre maximal de catégories, une catégorie comportant au moins une signature et une occurrence, le procédé (100) étant **caractérisé en ce qu'**il comporte les étapes du procédé (101) d'apprentissage selon l'une quelconque des revendications précédentes suivies des étapes suivantes :
- Pour chaque jeu de données reçu :
o Stockage du jeu de données dans la mémoire (201, 102) ;
o Calcul de la signature du jeu de données (103) ;
o Sélection de la catégorie d'occurrence maximale et calcul de la mesure de similitude entre la signature du jeu de données et la signature de la catégorie sélectionnée (104) :
1. Si la mesure de similitude répond à une condition de normalité (CN), suppression du jeu de données de la mémoire (201, 107) ;
2. Sinon, s'il reste des catégories pour lesquelles aucune mesure de similitude n'a été calculée avec la signature du jeu de données et que les mesures de similitude précédemment calculées ne répondent pas à la condition de normalité (CN, CB) :
a. Sélection de la catégorie ayant une occurrence égale ou immédiatement inférieure à l'occurrence de la catégorie dont la signature a été utilisée pour calculer la mesure de similitude précédente et calcul de la mesure de similitude entre la signature du jeu de données et la signature de la catégorie sélectionnée (105) ;
b. Si la mesure de similitude répond à la condition de normalité (CN), suppression du jeu de données de la mémoire (201, 107) ;
3. Si aucune des mesures de similitude précédemment calculées ne répond à la condition de normalité (CN), détection d'une anomalie (106) et suppression du jeu de données de la mémoire (201, 107).

6. Procédé (100) de détection d'anomalies selon la revendication 5, **caractérisé en ce que** l'étape (106) de détection d'une anomalie comporte une sous-étape de déclenchement d'une alarme et/ou une sous-étape d'envoi d'un message d'alerte.

7. Procédé (100) de détection d'anomalies selon l'une quelconque des revendications 5 à 6, **caractérisé en ce qu'**il comporte à nouveau les étapes du procédé (101) d'apprentissage selon l'une quelconque des revendications 1 à 4.

8. Microcontrôleur (200) implémentant les étapes du procédé (101) d'apprentissage selon l'une quelconque des revendications 1 à 4 et/ou les étapes du procédé (100) de détection d'anomalies selon l'une quelconque des revendications 5 à 7, **caractérisé en ce qu'**il comporte un processeur (202) et une mémoire (201) et qu'il reçoit des jeux de données en provenance d'au moins un capteur (203).

9. Microcontrôleur (200) selon la revendication 8, **caractérisé en ce que** le capteur (203) est connecté au microcontrôleur (200) via un bus de données série ou via une connexion filaire ou non filaire.

10. Produit-programme d'ordinateur comprenant des instructions qui, lorsque le programme est exécuté par un ordinateur, conduisent celui-ci à mettre en œuvre les étapes du procédé (101) d'apprentissage selon l'une quelconque des revendications 1 à 4 et/ou les étapes du procédé (100) de détection d'anomalies selon l'une quelconque des revendications 5 à 7.

## Patentansprüche

1. Lernverfahren (101) zur Erkennung von Anomalien, auf einem Mikrocontroller (200) implementiert, umfassend mindestens einen Speicher (201), wobei der Mikrocontroller (200) zum Empfangen von Datensätzen, die von mindestens einem Sensor (203) stammen, konfiguriert ist, wobei der Speicher (201) zum Speichern einer maximalen Anzahl von Kategorien konfiguriert ist, wobei eine Kategorie mindestens eine Signatur und eine Okkurenz umfasst, wobei das Verfahren (101) **dadurch gekennzeichnet ist, dass** es die folgenden Schritte umfasst:
- solange eine Fortschrittsrate niedriger als eine Fortschrittsschwelle (CA) ist, für jeden Datensatz einer Menge von Datensätzen:
o Speichern des Datensatzes in dem Speicher (201, 1011);
o Berechnen einer Signatur des Datensatzes (1012);
o wenn mindestens eine Kategorie existiert, die in dem Speicher (201, CC) gespeichert ist:
1. Berechnen eines Ähnlichkeitsmaßes zwischen der Signatur des Datensatzes und der Signatur jeder Kategorie und Auswählen des maximalen Ähnlichkeitsmaßes (1013):
a. wenn das maximale Ähnlichkeitsmaß eine Aktualisierungsbedingung (CMAJ) erfüllt, Aktualisieren der entsprechenden Kategorie aus dem Datensatz (1014);
b. andernfalls:
i. wenn die Anzahl von Kategorien, die in dem Speicher (201) gespeichert sind, kleiner als die maximale Anzahl von Kategorien (CNC) ist, Erzeugen einer Kategorie aus dem Datensatz (1015) in dem Speicher (201);
ii. andernfalls Auswählen der Kategorie mit einer minimalen Okkurenz (1016);
1. wenn die minimale Okkurenz eine Okkurenzbedingung (CO) erfüllt, Löschen der entsprechenden Kategorie (1017) und Erzeugen einer Kategorie aus dem Datensatz (1015) in dem Speicher (201);
2. andernfalls Auswählen der zwei Kategorien, deren Signaturen ein maximales Ähnlichkeitsmaß aufweisen, Erzeugen einer einzigen Kategorie durch Vereinigen von zwei ausgewählten Kategorien (1018) und Erzeugen einer Kategorie aus dem Datensatz in dem Speicher (201, 1015);
o wenn keine Kategorie existiert, Erzeugen einer Kategorie aus dem Datensatz in dem Speicher (201, 1015);
o Löschen des Datensatzes des Speichers (201) und Aktualisieren der Fortschrittsrate (1019).

2. Lernverfahren (101) nach Anspruch 1, **dadurch gekennzeichnet, dass** der Unterschritt (1014) des Aktualisierens einer Kategorie einen Schritt des Aktualisierens der Signatur der Kategorie aus der Signatur des Datensatzes und des Inkrementierens der Okkurenz der Kategorie umfasst.

3. Lernverfahren (101) nach einem der vorhergehenden Ansprüche, **dadurch gekennzeichnet, dass** der Unterschritt (1015) des Erzeugens einer Kategorie einen Schritt des Zuordnens der Signatur des Datensatzes zu der Signatur der einzigen Kategorie und des Zuordnens einer Okkurenz von 1 zu der Kategorie umfasst.

4. Lernverfahren (101) nach einem der vorhergehenden Ansprüche, **dadurch gekennzeichnet, dass** der Unterschritt (1018) des Erzeugens einer einzigen Kategorie durch Vereinigen einen Schritt des Zuordnens des Schwerpunkts von Signaturen von zwei zu vereinigenden Kategorien zu der Signatur der einzigen Kategorie und des Zuordnens der Summe von Okkurenzen von zwei zu vereinigenden Kategorien zu der Okkurenz der einzigen Kategorie umfasst.

5. Verfahren (100) zur Erkennung von Anomalien, auf einem Mikrocontroller (200) implementiert, umfassend mindestens einen Speicher (201), wobei der Mikrocontroller (200) zum Empfangen von Datensätzen, die von mindestens einem Sensor (203) stammen, konfiguriert ist, wobei der Speicher (201) zum Speichern einer maximalen Anzahl von Kategorien konfiguriert ist, wobei eine Kategorie mindestens eine Signatur und eine Okkurenz umfasst, wobei das Verfahren (101) **dadurch gekennzeichnet ist, dass** es die Schritte des Lernverfahrens (101) nach einem der vorhergehenden Ansprüche umfasst, auf die die folgenden Schritte folgen:
- für jeden empfangenen Datensatz:
o Speichern des Datensatzes in dem Speicher (201, 102);
o Berechnen der Signatur des Datensatzes (103);
o Auswählen der Kategorie der maximalen Okkurenz und Berechnen des Ähnlichkeitsmaßes zwischen der Signatur des Datensatzes und der Signatur der ausgewählten Kategorie (104);
1. wenn das Ähnlichkeitsmaß eine Normalitätsbedingung (CN) erfüllt, Löschen des Datensatzes des Speichers (201, 107);
2. andernfalls, wenn Kategorien verbleiben, für die kein Ähnlichkeitsmaß mit der Signatur des Datensatzes berechnet wurde und die vorher berechneten Ähnlichkeitsmaße nicht der Normalitätsbedingung (CN, CB) entsprechen:
a. Auswählen der Kategorie mit einer Okkurenz, die gleich oder etwas kleiner als die Okkurenz der Kategorie ist, deren Signatur zum Berechnen des vorhergehenden Ähnlichkeitsmaßes verwendet wurde, und Berechnen des Ähnlichkeitsmaßes zwischen der Signatur des Datensatzes und der Signatur der ausgewählten Kategorie (105);
b. wenn das Ähnlichkeitsmaß die Normalitätsbedingung (CN) erfüllt, Löschen des Datensatzes des Speichers (201, 107);
3. wenn keines der vorher berechneten Ähnlichkeitsmaße die Normalitätsbedingung (CN) erfüllt, Erkennen einer Anomalie (106) und Löschen des Datensatzes der Speicher (201, 107).

6. Verfahren (100) zur Erkennung von Anomalien nach Anspruch 5, **dadurch gekennzeichnet, dass** der Schritt (106) des Erkennens einer Anomalie einen Unterschritt des Auslösens eines Alarms und/oder einen Unterschritt des Sendens einer Warnnachricht umfasst.

7. Verfahren (100) zur Erkennung von Anomalien nach einem der Ansprüche 5 bis 6, **dadurch gekennzeichnet, dass** es wiederum die Schritte des Lernverfahrens (101) nach einem der Ansprüche 1 bis 4 umfasst.

8. Mikrocontroller (200), der die Schritte des Lernverfahrens (101) nach einem der Ansprüche 1 bis 4 und/oder die Schritte des Verfahrens (100) zur Erkennung von Anomalien nach einem der Ansprüche 5 bis 7 implementiert, **dadurch gekennzeichnet, dass** er einen Prozessor (202) und einen Speicher (201) umfasst und dass er Datensätze empfängt, die von mindestens einem Sensor (203) stammen.

9. Mikrocontroller (200) nach Anspruch 8, **dadurch gekennzeichnet, dass** der Sensor (203) mittels einem seriellen Datenbus oder mittels einer drahtgebundenen oder nicht drahtgebundenen Verbindung mit dem Mikrocontroller (200) verbunden ist.

10. Computerprogrammprodukt, umfassend Anweisungen, die, wenn das Programm von einem Computer ausgeführt wird, bewirken, dass dieser die Schritte des Lernverfahrens (101) nach einem der Ansprüche 1 bis 4 und/oder die Schritte des Verfahrens (100) zur Erkennung von Anomalien nach einem der Ansprüche 5 bis 7 umsetzt.

## Claims

1. Learning method (101) for detecting anomalies implemented on a microcontroller (200) comprising at least one memory (201), the microcontroller (200) being configured to receive data sets from at least one sensor (203), the memory (201) being configured to store a maximum number of categories, a category comprising at least a signature and an occurrence, the method (101) being **characterised in that** it comprises the following steps:
- As long as a progress rate is below a progress threshold (CA), for each data set of a collection of data sets:
-- Storing the data set in the memory (201, 1011);
-- Computing a signature of the data set (1012);
-- If there is at least one category stored in the memory (201, CC):
--- Computing a similarity measure between the signature of the data set and the signature of each category and selecting the maximum similarity measure (1013):
---- If the maximum similarity measure meets an update condition (CMAJ), updating the corresponding category from the data set (1014);
---- Otherwise:
----- If the number of categories stored in the memory (201) is less than the maximum number of categories (CNC), creating a category from the data set (1015) in the memory (201);
----- Otherwise, selecting the category having a minimum occurrence (1016);
------ If the minimum occurrence meets an occurrence condition (CO), deleting the corresponding category (1017) and creating a category from the data set (1015) in the memory (201);
------ Otherwise, selecting the two categories whose signatures have a maximum similarity measure, creating a single category by merging the two selected categories (1018) and creating a category from the data set in the memory (201, 1015);
-- If no category exists, creating a category from the data set in the memory (201, 1015);
-- Deleting the data set from the memory (201) and updating the progress rate (1019).

2. Learning method (101) according to claim 1, **characterised in that** the sub-step (1014) of updating a category comprises a step of updating the signature of the category from the signature of the data set and of incrementing the occurrence of the category.

3. Learning method (101) according to any one of the preceding claims, **characterised in that** the sub-step (1015) of creating a category comprises a step of assigning the signature of the data set to the signature of the single category and of assigning an occurrence of 1 to the category.

4. Learning method (101) according to any one of the preceding claims, **characterised in that** the sub-step (1018) of creating a single category by merging comprises a step of assigning the barycentre of the signatures of the two categories to be merged to the signature of the single category and of assigning the sum of the occurrences of the two categories to be merged to the occurrence of the single category.

5. Method (100) for detecting anomalies implemented on a microcontroller (200) comprising at least one memory (201), the microcontroller (200) being configured to receive data sets from at least one sensor (203), the memory (201) being configured to store a maximum number of categories, a category comprising at least a signature and an occurrence, the method (100) being **characterised in that** it comprises the steps of the learning method (101) according to any one of the preceding claims followed by the following steps:
- For each data set received:
-- Storing the data set in the memory (201, 102);
-- Computing the signature of the data set (103);
-- Selecting the category of maximum occurrence and computing the similarity measure between the signature of the data set and the signature of the selected category (104) :
--- If the similarity measure meets a normality condition (CN), deleting the data set from the memory (201, 107);
--- Otherwise, if there are still categories for which no similarity measure has been computed with the signature of the data set and if the previously computed similarity measures do not meet the normality condition (CN, CB):
---- Selecting the category having an occurrence equal to or immediately less than the occurrence of the category whose signature was used to compute the previous similarity measure and computing the similarity measure between the signature of the data set and the signature of the selected category (105);
---- If the similarity measure meets the normality condition (CN), deleting the data set from the memory (201, 107);
--- If none of the previously computed similarity measures meets the normality condition (CN), detecting an anomaly (106) and deleting the data set from the memory (201, 107) .

6. Method (100) for detecting anomalies according to claim 5, **characterised in that** the step (106) of detecting an anomaly comprises a sub-step of triggering an alarm and/or a sub-step of sending an alert message.

7. Method (100) for detecting anomalies according to any one of claims 5 to 6, **characterised in that** it comprises carrying out once again the steps of the learning method (101) according to any one of claims 1 to 4.

8. Microcontroller (200) implementing the steps of the learning method (101) according to any one of claims 1 to 4 and/or the steps of the method (100) for detecting anomalies according to any one of claims 5 to 7, **characterised in that** it comprises a processor (202) and a memory (201) and **in that** it receives data sets from at least one sensor (203).

9. Microcontroller (200) according to claim 8, **characterised in that** the sensor (203) is connected to the microcontroller (200) via a serial data bus or via a wired or wireless connection.

10. Computer program product comprising instructions which, when the program is executed by a computer, cause said computer to carry out the steps of the learning method (101) according to any one of claims 1 to 4 and/or the steps of the method (100) for detecting anomalies according to any one of claims 5 to 7.
